# EUROPEAN PATENT SPECIFICATION

(11) **EP 2 211 525 B1**
(45) Date of publication and mention of the grant of the patent: **03.08.2011**
(21) Application number: 09000882.2
(22) Date of filing: 22.01.2009
(51) Int. Cl.: H04L 29/08, H04L 29/12, G06F 17/30

(54) **Method for distributing in a self-organizing, distributed overlay network a reference to an object**
Verfahren zur Verteilung einer Referenz zu einem Objekt in einem selbstorganisierenden, verteilten Überlagerungsnetzwerk
Procédé de distribution dans un réseau superposé distribué à auto-organisation une référence sur un objet

(43) Date of publication of application: 28.07.2010
(73) Proprietor: NTT DOCOMO, INC., Tokyo 100-6150 (JP)
(72) Inventor: Kellerer, Wolfgang, 82256 Fuerstenfeldbruck (DE); Despotovic, Zoran, 80687 Munich (DE); Michel, Maximilian, 80993 München (DE); Hofstaetter, Quirin, 80807 München (DE)
(74) Representative: Zimmermann, Tankred Klaus

(56) References cited:
- WO-A-01/69457
- US-A1- 2008 010 299
- CAI M ET AL: "A Peer-to-Peer Replica Location Service Based on a Distributed Hash Table" SUPERCOMPUTING, 2004. PROCEEDINGS OF THE ACM/IEEE SC2004 CONFERENCE PITTSBURGH, PA, USA 06-12 NOV. 2004, PISCATAWAY, NJ, USA,IEEE, 6 November 2004 (2004-11-06), pages 56-56, XP010779868 ISBN: 978-0-7695-2153-4

## Description

### Description

The present application relates to the field of self-organizing, distributed overlay networks, like Peer-to-Peer networks and, more specifically, to a method for distributing within such a network, a reference to an object associated with a node of the network. Further, the invention relates to a node within such a network, wherein the node is configured to distribute a reference to an object associated with a specific node in the network. The present invention also relates to a self-organizing, distributed overlay network comprising a plurality of such nodes.

Peer-to-Peer (P2P) networks are self-organizing, distributed overlay networks enabling a fast location of a set of resources. They are realized as application layer overlay networks relying on whatever physical connectivity among the participating nodes. The basic problem addressed by a P2P network is the self-organized distribution of a set of resources among a set of peers enabling their subsequent fast lookup.

Distributed Hash Tables (DHTs) are a promising approach to solve this problem. In a DHT peers collaboratively manage specific subsets of resources identified by keys from a key space. Each peer is associated with a key taken from the key space. Given the set of peers, the key of each peer is associated with a partition of the key space such that the peer becomes responsible to manage all resources identified by keys from the associated partition. The key partition consists of all keys closest to the peer key in a suitable metric, whereby the closeness of keys is measured by a distance function. To forward resource requests, peers form a routing network taking into account the knowledge about the association of peers with key partitions. Peers typically maintain short-range links to all peers with neighboring keys and in addition a small number of long-range links to some selected distant peers. Using the routing network established in this way peers forward resource requests in a directed manner to other peers from their routing tables trying to greedily reduce the distance to the key being looked up. This way, most of DHTs achieve lookups with a number of hops logarithmic in the size of network by using routing tables which are also logarithmic in the size of the network.

The good properties related to the efficiency of routing do not come for free. For constructing and maintaining a DHT peers have to deal in particular with the problem of node joins and failures. Since the freedom to choose neighbors in a structured P2P network is constrained, maintenance algorithms are required to reestablish the consistency of routing tables in the presence of network dynamics. The different maintenance strategies trade-off maintenance cost versus degree of consistency and thus failure resilience of the network.

In order to maximize the availability of an item in the network even if the peer storing the reference to it fails, and also to reduce lookup traffic and response time it is necessary to introduce a form of caching and/or replication into the system. These approaches lead - either proactively or reactively - to a distribution of copies of the references throughout the network.

As queries for content (as well as the content itself) do not follow a uniform distribution but are usually considered as Zipf distributed (see e.g. J. Kangasharju, K. W. Ross, and D. A. Turner, "Adaptive Content Management in Structured P2P Communities," in Proceedings of the First International Conference on Scalable Information Systems (Infoscale), Berkeley, CA, USA, 2003), a mature strategy is needed to distribute the replicas onto the peers in the network. So far this problem has been tackled by caching the queried references along the whole path back from the sink of the query to its source. The next query can then be answered by the first node encountered on the path of a new query that was involved in routing the first query. Examples for systems using this method are PAST (see e.g. I. Stoica, R. Morris, D. Karger, F. Kaashoek, and H. Balakrishnan, "Chord: A Scalable Peer-To-Peer Lookup Service for Internet Applications," in Proceedings of the 2001 ACM SIGCOMM Conference, 2001, pp. 149-160) or CFS (Cooperative File System) (see e.g. F. Dabek, M. F. Kaashoek, D. Karger, R. Morris, and I. Stoica, "Widearea cooperative storage with CFS," in Proceedings of the 18th ACM Symposium on Operating Systems Principles (SOSP '01), Chateau Lake Louise, Banff, Canada, October 2001). However, by copying the references to all nodes along the lookup path, this strategy introduces also a high overhead for distributing data across the network. Even if the demand for content is low, many messages will be generated to inform all participating nodes. This leads to higher costs than necessary which is especially unwanted in mobile networks.

There is an extensive body of work on caching and replication in P2P networks. The driving force for this research is reducing the traffic and improving the quality of experience to the user, primarily through reduction of delays.

E. Cohen and S. Shenker, "Replication strategies in unstructured peer-to-peer networks," in SIGCOMM 2002, Pittsburgh, USA, 2002 and Q. Lv, P. Cao, E. Cohen, K. Li, and S. Shenker, "Search and replication in unstructured peer-to-peer networks," in International Conference on Supercomputing, New York, USA, 2002, pp. 84-95 provide elaborate, both theoretical and empirical analyses of caching strategies in unstructured P2P networks. The key assumption made in these works is that search is random (i.e., random walk is used as the search technique, as opposed to flooding). Building on this assumption, strong theoretical models of caching and characterizations of various caching techniques are provided. The main result is that so called "square root replication" is the optimal caching strategy. The goal function to optimize is the expected search size, i.e., the average number of hops to contact in order to find an object.

S. Iyer, A. Rowstron, and P. Druschel, "SQUIRREL: A decentralized, peer-to-peer web cache," in Proceedings of 12th ACM Symposium on Principles of Distributed Computing (PODC 2002), Monterey, CA, USA, 2002, J. Kangasharju, K. W. Ross, and D. A. Turner, "Adaptive Content Management in Structured P2P Communities," in Proceedings of the First International Conference on Scalable Information Systems (Infoscale), Berkeley, CA, USA, 2003 and "Optimizing File Availability in P2P Content Distribution," in Proceedings of the IEEE Infocom Conference, Anchorage, AK, USA, 2007 present another group of works targeting caching in P2P networks. However, they focus on content distribution rather than search. They consider a P2P community such that distributing content between peers within the community is considerably cheaper than transferring it to the community from outside (e.g., a large university campus with a high speed LAN connected to the outer world via a slower or congested link). It turns out that in such a setting the intra-community cache hit rate is the most relevant metric to optimize (see J. Kangasharju, K. W. Ross, and D. A. Turner, "Adaptive Content Management in Structured P2P Communities," in Proceedings of the First International Conference on Scalable Information Systems (Infoscale), Berkeley, CA, USA, 2003 and "Optimizing File Availability in P2P Content Distribution," in Proceedings of the IEEE Infocom Conference, Anchorage, AK, USA, 2007). These works frame the problem of content replication as an instance of integer programming with the goal of assigning copies of files across peers so that the hit rate is optimal given peer membership dynamics (arrivals and departures). As the key contribution, these works derive the optimal replication profile and propose an algorithm that comes asymptotically close to this profile.

The problem of caching in P2P networks has also been addressed in the context of distributed file systems built on top of distributed hash tables. Examples are CFS (see F. Dabek, M. F. Kaashoek, D. Karger, R. Morris, and I. Stoica, "Widearea cooperative storage with CFS," in Proceedings of the 18th ACM Symposium on Operating Systems Principles (SOSP '01), Chateau Lake Louise, Banff, Canada, October 2001) and PAST (see A. Rowstron and P. Druschel, "Storage management and caching in PAST, a large-scale, persistent peer-to-peer storage utility," in ACM Symposium on Operating Systems Principles (SOSP'01), 2001) implemented on top of Chord (see I. Stoica, R. Morris, D. Karger, F. Kaashoek, and H. Balakrishnan, "Chord: A Scalable Peer-To-Peer Lookup Service for Internet Applications," in Proceedings of the 2001 ACM SIGCOMM Conference, 2001, pp. 149-160) and Pastry (see A. Rowstron and P. Druschel, "Pastry: Scalable, distributed object location and routing for large-scale peer-to-peer systems," in IFIP/ACM International Conference on Distributed Systems Platforms (Middleware), nov 2001, pp. 329-350), respectively, as well as Freenet (see I. Clarke, S. G. Miller, T. W. Hong, O. Sandberg, and B. Wiley, "Protecting free expression online with freenet," IEEE Internet Computing, vol. 6, no. 1, pp. 40-49, 2002). Both F. Dabek et. al. and A. Rowstron et. al. cache files (or pieces thereof - see F. Dabek et. al.) along an entire search path using the last recently used (LRU) replacement policy. From the point of view of the generated traffic, this caching strategy is suboptimal, i.e., generates higher traffic than other caching strategies (as will be demonstrated later). However, this strategy may be more effective when other requirements are taken into account such as load balancing. Content distribution networks (CDN) such as Akamai (see "Akamai Technologies Inc., www.akamai.com.") essentially provide a caching and replication solution in the context of the World Wide Web. They investigate access patterns to specific Web sites and then replicate their content over a large set of servers across the world so that a specific goal, such as average access delay, is met. In comparison to the problem above, the main difference is that with CDNs only a subset of nodes can cache the content and that CDNs have a large degree of freedom when choosing where to place their servers.

As mentioned before, caching can be seen as a valuable technique to balance load in P2P networks. This is an important problem as the participating nodes typically have low capabilities and can be easily affected by heavy load. V. Gopalakrishnan, B. Silaghi, B. Bhattacharjee, and P. Keleher, "Adaptive replication in peer-to-peer systems," in Proc. of the 24th International Conference on Distributed Computing Systems (ICDCS), Tokyo, Japan, 2004 present an example of the application of caching to address this problem.

As just discussed, caching and replication have been recognized as valuable techniques to improve performance of the World Wide Web. In that context, these techniques attempt to (1) improve users' quality of experience through reducing delays to access desired resources, e.g., web pages, (2) reduce the network traffic through accessing nearby copies of resources rather than distant ones and (3) offload Web servers and reduce their bandwidth demand (see A. Feldmann, R. Caceres, F. Douglis, G. Glass, and M. Rabinovich, "Performance of Web Proxy Caching in Heterogeneous Bandwidth Environments," in Proceedings of the IEEE Infocom Conference, New York, USA, 1999). All these benefits of caching transfer directly to the problem of search in P2P networks. Reducing delays remains relevant as P2P search messages go across multiple hops until a document or an object being looked for is found. Reducing the number of hops to travel will also reduce the traffic in the underlying physical network, while the third benefit translates to load balancing as caching effectively distributes the load across nodes holding copies of data items.

An important aspect is the improvement of the performance of a P2P search by caching. More specifically, consider a P2P network of a given size storing a collection of objects. These objects are targets of queries form nodes in the network. Queries follow a specific distribution, typically a Zipf distribution (the frequency of an object is inversely proportional to its rank in the frequency table). Queries are forwarded among the nodes until a node having a pointer to the searched object is found. This node sends the object pointer back to the querying node, thus ending the search process. A set of pointers received by the querying node from various nodes is called a search result. Assume that each node in the network has some spare space to cache queries, i.e., their results. So when learning that node P1 stores a data object A, node P2 can store a pointer in its cache in the form (A, P1). When a new query for object A arrives at node P2, node P2 may send its cached shortcut back to the querying node instead of following the usual query forwarding procedure, thus reducing the query path. A number of questions arise in view of this approach. (1) What is the optimal distribution of references in the above form across the caches of the nodes in the network if the ultimate goal is to minimize the search size, i.e., the number of hops a query has to visit on average? (2) What is a distributed algorithm to achieve that optimal distribution? The same two questions can be repeated just with a changed goal to meet, such as minimizing the network traffic or distributing the load as evenly as possible instead of minimizing the search size.

Most of the literature on P2P caching focuses on caching techniques to reduce the average search size as much as possible. However, these techniques are normally suboptimal with respect to the total network traffic, i.e., the sum of all messages generated in the overlay network. Consider the following extreme example. After a query is resolved, the node holding the object can send updates to all nodes in the network. If nodes employ a suitable cache replacement policy, such as most-frequently-requested (MFR), the search size should be minimized after all caches are populated. However, this is highly inefficient with respect to the network traffic. The source of this inefficiency is twofold: (1) caching must be proactive in the sense that cached references must be pushed toward a subset of nodes in the network (e.g., to all nodes along a query path) and (2) as such, populating caches is costly and these costs must be taken into account when measuring the network traffic. The network traffic might be more important for an overlay operator interested in reducing its operational costs, besides increasing the quality of experience of its users.

Cai M et al: "A Peer-to-Peer Replica Location Service Based on a Distributed Hash Table", Supercomputing, 2004, Proceedings of the ACM/IEEE SC2004, Piscataway, NJ, USA, November 6, 2004, pages 56 to 66 describe balancing a query load for popular mappings by replicating mappings in predecessor nodes of a root node.

WO 01/69457 A2 describes a system and method for discovering information objects and information object repositories in computer networks, wherein the system comprises a web cache that starts maintaining a local copy of an information object when the number of requests it receives for the object reaches a predefined number.

It is the object of the present invention to provide an improved approach for caching results of queries within a self-organizing, distributed overlay network, which allows for a reduction of lookup path length and traffic within the network.

This object is solved by a method according to claim 1, a computer program product according to claim 10, a node according to claim 11, and a self-organizing, distributed overlay network according to claim 12.

Further, the present invention provides a self-organizing, distributed overlay network comprising a plurality of a node implementing the inventive method.

Preferred embodiments of the inventive approach are defined in the dependent claims.

The works discussed above provide important insights into how caching works. The approaches discussed in these works may by applicable to DHTs, however they try to minimize the search time or length, whereas the present invention minimizes caching in DHTs. First, the fundamental difference between the models of E. Cohen and S. Shenker, "Replication strategies in unstructured peer-to-peer networks," in SIGCOMM 2002, Pittsburgh, USA, 2002 and Q. Lv, P. Cao, E. Cohen, K. Li, and S. Shenker, "Search and replication in unstructured peer-to-peer networks," in International Conference on Supercomputing, New York, USA, 2002, pp. 84-95 and caching in DHTs is that the assumption of random search does not hold in DHTs. Second, there is a focus on the total cost of operation of a DHT as the measure of optimality. This is different from the expected search size in the sense that it also includes the cost of replication itself, which is absent from E. Cohen et. al. and Q. Lv et. al. To be precise, when an object has to be cached by nodes other than its providers and consumers (e.g., "path replication" of Q. Lv et. al), there are costs of distributing the replica of the object. These costs are not covered by the models of E. Cohen et. al. and Q. Lv et. al. The metric considered by embodiments of the invention includes such costs.

To be more specific, while state of the art caching solutions for DHTs cache results of queries along the whole search paths, i.e., all nodes through which a query passes the query result, the approach in accordance with embodiments of the invention is different. A distributed, push-based caching method (algorithm) is introduced, in which nodes in the network push references to stored objects toward nodes preceding them in lookup paths only if those references are frequently requested. The nodes maintain a simple data structure to measure query frequencies. Only when the frequency of a query is above a certain threshold, the query result is pushed back to nodes who happened to route that query to the current node. This algorithm leads to a significant reduction of lookup paths length (number of hops) and the total amount of lookup traffic. Also there exists an optimal configuration of the algorithm, i.e., an optimal frequency threshold, which may be found by simulations.

Embodiments of the invention present a distributed, push-based caching approach (algorithm) that highly increases the probability of a successful query. In accordance with this approach nodes in the network push references to stored objects toward nodes preceding them in lookup paths only if those references are frequently requested. This approach leads to a significant reduction of lookup paths length (number of hops) and the total amount of lookup traffic.

Embodiments of the invention use an on-demand push method (algorithm) to populate the nodes' caches backwards stepby-step. The references are not distributed along the whole path at once but the number of copies is increased only with the increasing demand. The distributed algorithm leads to an adaptive content replication that is able to fit to the non-uniform distribution of query requests in P2P networks. The increased availability gained increases the probability to obtain a query result even if the peer responsible for storing the demanded reference has failed.

In accordance with embodiments of the invention, each peer tracks query frequencies based on queries it routes. Only when a sufficiently high demand for a given object is detected, a peer sends its corresponding cached reference to the previous hops (the nodes that forwarded the query) that happened to forward queries for the concerned object earlier in the past. Sufficient demand may be defined in terms of a query frequency threshold that needs to be crossed in order to push queries toward the previous hops. There exists an optimal value of this threshold which changes only slightly when the other parameters (such as the network size, the network operation time and so on) change.

The inventive approach may be of benefit in any peer-to-peer communication system. Its main contribution is the reduction of overlay traffic through caching and as such it is of interest from the point of view of the underlying network. The inventive approach may be of specific benefit for users of DHT overlay operators through reduction of query response times and for underlying physical network operators through reduction of the overall traffic.

In general, the advantages of caching are lower latency for accessing a network resource as well as reduced traffic associated with the access. The former of these two advantages may be more important for the user, while the physical network operator may be more interested in the latter one. The approach as defined by embodiments of the invention brings these two advantages. Through a reduction of lookup path length it reduces the total query execution time. Another effect of lookup path length reduction is reduction of search traffic. However, one has to keep in mind that there is also an increase of traffic through pushing of references to the queried content along lookup paths. It will be demonstrated that this increase is offset by the positive effect of lookup path reduction, so that the final effect is indeed positive.

There are a number of further advantages. Given the volatile nature of nodes in a typical P2P system, lookup path reduction is also associated with an increase of probability of successful queries. It will also be demonstrated that the caching algorithm as defined by embodiments of the invention achieves the mentioned reduction fast, i.e., efficient distribution of cached references across nodes is reached only after each node has sent a few tens of queries on average. Thus when the query distribution changes dynamically those changes may be tracked more efficiently.

In the following, preferred embodiments of the present application will be described in further detail with reference to the accompanying Figs., in which:
- Fig. 1: is a schematic representation of a portion of a Peer-to-Peer network for illustrating the inven- tive approach of distributing a reference to an object among nodes within the network;
- Fig. 2: is a schematic representation of a node illus- trating those elements for implementing the in- ventive method;
- Fig. 3: shows, in the form of pseudo code, an algorithm implementing the method in accordance with an em- bodiment of the present invention;
- Fig. 4: shows a graphical representation of the total traffic within a Peer-to-Peer network as a func- tion of the query frequency threshold for various times in the network operation;
- Fig. 5: shows the total traffic as a function of the query frequency threshold for various query dis- tribution parameters;
- Fig. 6: shows the total traffic as a function of the query frequency threshold for various network sizes;
- Fig. 7: shows the total traffic as a function of the num- ber of queries sent per node for the cases with and without query distribution tracking (w = with; w/o = without);
- Fig. 8: shows the total traffic as a function of the Zipf distribution parameter for the cases with and without query distribution tracking; and
- Fig. 9: shows the total traffic as a function of the net- work size.

In the following, preferred embodiments of the present invention will be described in further detail. The terms reference and pointer will be used to mean the same thing.

Quite often, the term object us used to denote a pointer to a data object. The meaning will be clear from the context.

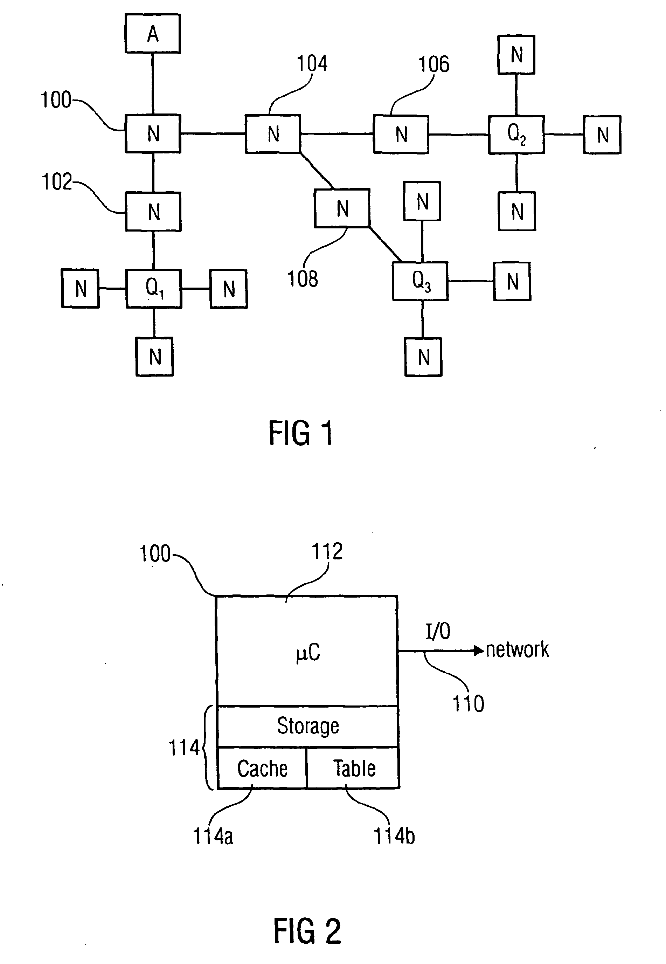

Fig. 1 is a schematic representation of a portion of a Peer-to-Peer network, which comprises a plurality of nodes N, among which three querier nodes Q₁, Q₂ and Q₃ are indicated, which, within the overall network, will issue a query for object A stored at the node indicated by the letter "A". The queries from the respective nodes Q₁ to Q₃ have to pass a number of intermediate nodes (hops) until the node being associated with the object A is found. Once the node is found, a reference to the node being associated with the object A is returned to the respective querier node Q₁, Q₂ and/or Q₃. This information is then used by the respective querier nodes to access the desired object A, which, for example, may be a specific content, like an audio content or a video content, a file, a document. a service, a specific provider or the like.

Conventional approaches teach to cache the reference to the object A in each node along the query path, i.e. in each of the nodes shown in Fig. 1, which lie between the querier node Q₁, Q₂ or Q₃ and the node A. This approach is disadvantageous and, therefore, the present invention provides an improved approach for distributing the reference to object A.

Assume that node 100 already holds a reference to object A. Node 100 is called the "current node" and may have received the reference to object A either from another node within the network (not shown) or due to a query for node A, which was generated by current node 100 and in response to which the reference to node A was obtained.

The queries from the querier nodes Q₁ to Q₃ are routed through the network along a query path comprising a number of hops (node) that the query passes from the querying node to the node holding the object. In accordance with the present invention, the reference to object A already stored in node 100 is not automatically transferred to all nodes along a specific query path. Rather, any distribution of the reference stored within node 100 to other nodes is made dependent on how frequently a query for object A was received at node 100. In case the frequency of requests for object A received at node 100 reaches a predefined threshold, one or more of the nodes, which forwarded the query to node 100 are provided with a copy of the reference to object A. In the example shown in Fig. 1, nodes 102 and 104 would be provided with a copy of the reference to object A in such a situation. More specifically, upon receipt of a query for object A at node 100, the number of received queries for object A, i.e. the number of queries for object A received at node 100, is determined and in case this number reaches the predefined threshold, the reference to object A is distributed within the Peer-to-Peer network. In accordance with the preferred embodiment, the reference from the current node 100 is forwarded to one or more nodes, like nodes 102 and 104 that forwarded one or more queries for the object A to the current node 100.

As will be described below in further detail, on the basis of various simulation results, the inventive approach allows for a substantial reduction of network traffic within the overall Peer-to-Peer network.

In accordance with a preferred embodiment, the present invention provides, at node 100, for a method in accordance with which from a forwarding node, for example, from node 102, a query for a specific object, like object A is received, wherein this object was generated by a querier node Q₁. It is noted that a similar approach is taken when receiving a query generated by querier node Q₂ or Q₃. At node 100, the query and the associated node, which forwarded the query, the so-called "forwarding node", for example, node 102 or 104, are stored, for example, within a table. More specifically, the query for object A is associated therewith a specific query identification, the so-called "queryID" and the forwarding node has associated therewith a node identification, the so-called nodeID. The queryID and the nodeID for each query received at current node 100 are stored as an entry within a table in current node 100 and for each query received at node 100, a respective entry in the table is generated. On the basis of the thus stored information, the number of queries for object A is determined. The number of queries is determined dependent on the ratio of entries including the queryID for object A to the overall number of entries in the table. In case it is determined that the ratio reached a predefined threshold p, the reference stored within a cache of node 100 is forwarded to the nodes identified by the nodeIDs stored in the respective table entries, for example, to nodes 102 and 104.

Alternatively, instead of using a table, current node 100 is provided with a plurality of counters. For each query for a specific object, like object A, an associated counter is increased. Also, the nodes from which the respective queries are stored. Upon reaching a specific count of the counter, the reference to object A may be distributed from current node 100 to the stored nodes, which forwarded the queries, for example, to nodes 102 and 104. When using a counter, the counter is set to a predefined starting value and either incremented or decremented until a predefined count, the predefined threshold, is reached initiating the transfer of the cached reference to the previous nodes.

At the receiving nodes 102 and 104, the reference to object A forwarded from current node 100 is stored so that at these nodes 102 and 104, also implementing the inventive method, a similar process is started. Thus, after receipt of a predefined number of queries for object A at nodes 104 and 106, for example, from querying nodes Q₂ and Q₃, the reference stored at node 104 is forwarded to and stored at nodes 106 and 108.

Regarding Fig. 1, it is noted that the present invention is not limited to the query for a single object, like object A. Rather, many objects are associated with one or more nodes within a Peer-to-Peer network so that queries for many different objects pass through the network. Thus, at current node 100, upon receipt of a specific query, it is first of all determined as to whether the current node comprises a reference to the specific object. In case current node 100 has such a reference, like the reference to object A, the search path ends at current node 100 and the information is directly returned to the querying node that generated the query, for example, one of nodes Q₁ to Q₃. At the same time, the number of queries for the specific object is updated at current node 100, for example, by updating the table as described above. It is noted that current node 100 not only introduces entries for the object for which he has a reference, namely entries regarding a query for object A, but he will also introduce into its table queries received for other objects for which current node 100 does not have a reference in its cache. This is advantageous as in such situations, queries for a specific object, which are routed through current node 100 for which the current node does not have a reference, are stored. In case the current node 100 receives the reference from a node to which he forwarded the request for the specific object the current node 100 may determine that the predefined threshold has already been reached for this specific object so that the reference may be further transferred to other nodes, which forwarded the query to the current node 100 earlier, like nodes 102 and 104. This approach ensures that the current node 100 keeps track of the most frequently received queries for a specific object independent from whether he has a reference to the object or not. In addition, this approach is advantageous in a situation where the current node 100 does not hold a reference to the specific object and where the number of queries for the specific object has not yet reached the threshold. In this case, when the current node 100 receives a copy of the reference from another node to the specific object, only a reduced number of queries for the specific object is to be received at the current node 100 for initiating the further distribution of the reference to the previous nodes 102 and 104.

With regard to Fig. 1, it is noted that the current node might also be a node, which generated a query for object A and, in response thereto, received the reference, i.e. current node 100 may also be a querying node.

Fig. 2 shows a schematic representation of the current node 100, which comprises an input/output 110 for connection to the network, i.e. to other nodes within the network. The node 100 comprises a processing unit 112, a storage 114, which comprises a cache memory 114a and a table 114b. The cache memory 114a is provided for caching references to different objects within the network, like to object A as described above. The table 114b holds entries of the different queries and the associated nodes so that using the contents of the table, the micro-controller or processing unit 112 is in a position to determine whether any reference, which is stored in the cache should be forwarded to a specific node within the network. The node 100 may, for example, be a computer having the required network connection and the computer may receive instructions, which will carry out the inventive method when executing same by the processor 112. The instructions may be provided to the processor in the form of a computer program product, which refers to any medium bearing code, algorithms, routines or instructions that participate in the functions of the processor. Common forms of such computer-readable media include, for example a floppy disc, a flexible disc, a hard disc, a magnetic tape, any other magnetic medium, a CD-ROM, a DVD, a blue ray disc, any other optical medium, a RAM, a PROM, an EPROM, a flash-EPROM, any other memory chip or carriage, a carrier wave transporting data or instructions, cables or links transporting such a carrier wave or any other medium from which a computer can read a programming code and/or data.

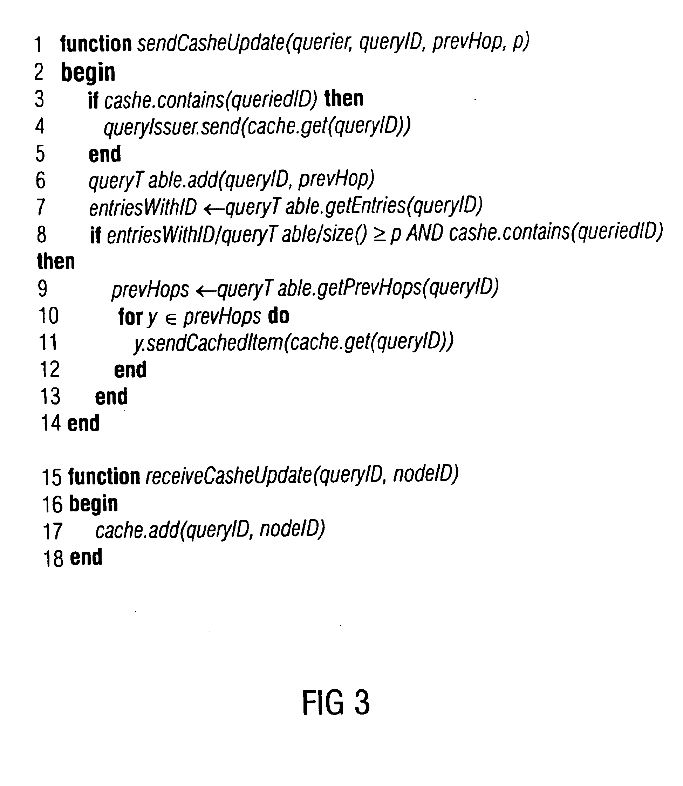

With respect to Fig. 3, an embodiment of the method implemented on the nodes shown in Figs. 1 and 2 for distributing a reference to an object within a P2P network will be described.

The method (algorithm) is push-based in that it distributes copies of references only if a high demand for them has been detected. As described above with respect to Figs. 1 and 2, every peer (e.g. node 100, 102, 104, 106, 108) maintains two data structures:
(1) the cache 114a that holds the cached references, and
(2) the table 114b of queried IDs that is used to determine which references should be pushed to other nodes.

The table 114b of queried IDs contains entries in the form (queriedID, previousHop). Each entry in the table 114b records the ID of the queried object (queriedID) and the previous hop from which the corresponding query came. Whenever a node routes a query, it adds a new entry to the table 114b. As the second step, the node calculates the relative frequency of the queried ID (e.g., the fraction of the entries with that query ID relative to the size of the table 114b). If that relative frequency exceeds a certain threshold and if the node's cache holds a reference of the queried object, then the reference is pushed toward all nodes who happened to be previous hops of recent queries for the same ID, and whose contact information is present in the node's table 114b. If the table size limit is exceeded, an old entry is replaced. The replacement policy is LRU.

The method (algorithm) is shown as two functions in the pseudo code shown in Fig. 3.

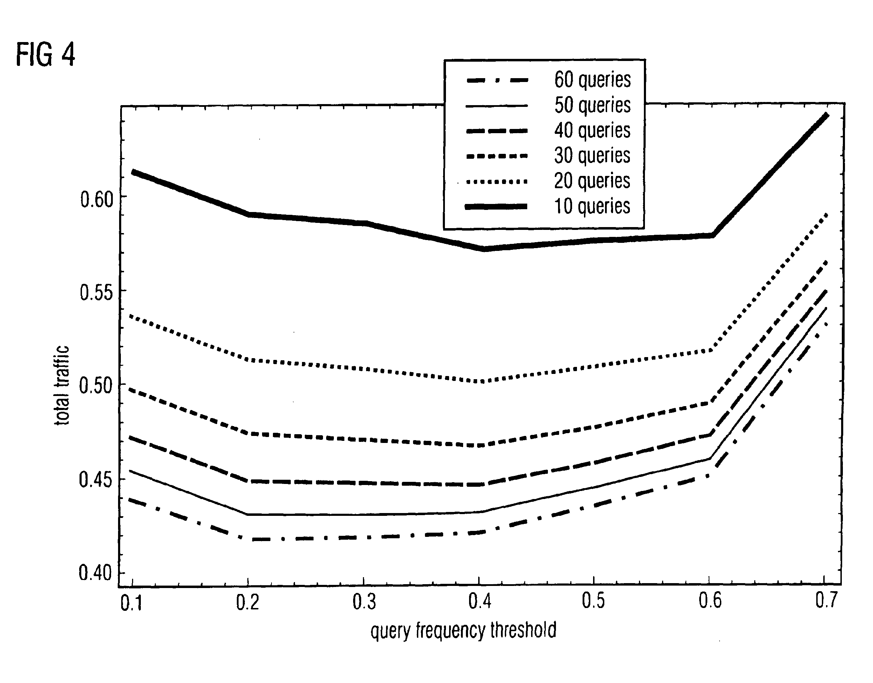

As is shown at line 1 of Fig. 3, the function "sendCacheUpdate" is called whenever a node routes a query, including the case when the node is responsible for the queriedID, for example, node 100 shown in Fig. 1. Together with the call of this function, information about the querier, i.e. the node that generated the query, like node Q₁, Q₂ or Q₃ shown in Fig. 1, an identification of the query, the queryID, the so-called "previousHop" and the threshold p is obtained. The call for this function is from the routing handler of the current node 100 in which the just mentioned parameters of the call, namely the querier, the queryID, the previousHop and the threshold p are resolved. It is determined as to whether the cache 114a of the current node 100 contains the queriedID (see line 3 in Fig. 3). If the node 100 has the queriedID in its cache 114a, it sends back the response to the querying node, as is shown in line 4 of Fig. 4 by calling the function queryIssuer.send, which will return the reference to the queried object, like object A in Fig. 1 to the querying node, the queryIssuer, like one of nodes Q₁ to Q₃. After that, the statistics about the query frequencies are updated by adding the pair (previousHop, queryID) to the query table 114b as is shown at line 6 of Fig. 3.

For determining whether the threshold p with regard to the received query is reached, all entries in the table having the received queryID are obtained, as is shown at line 7 of Fig. 3. If the queryID is frequent enough, i.e. its frequency exceeds a certain threshold p and in case the cache 114a contains a reference to the queriedID (see line 8 of Fig. 3), all nodes that happen to be previous nodes to route that queryID to the current node 100 are retrieved, as is shown at line 9 of Fig. 3. As is shown in Fig. 3 at line 8, in accordance with the embodiment described here, the ratio of the entries having the queryID to the table size is determined and compared to the threshold p and in case the threshold is exceeded and the cache contains the requested reference, the previousHops are obtained in line 9 of Fig. 3. The reference associated with the queryID, for example, the full information about the queriedID including the address of the node responsible for that ID, is sent to all prevousHops found, as is indicated in line 11 of Fig. 3.

Lines 15 to 18 indicate the function, which is called at those nodes receiving, from the current node, the information associated with the queryID. In response to the function "sendCacheUpdate", the function "receiveCacheUpdate" is called including, as parameters, the queryID and the nodeID (the reference to the object A). The node executing the function updates its cache 114a with a data item received. The update policy for the cache may be the most frequently requested (MFR). However, also other cache replacement policies may be used, for example, random or LRU replacement. No significant change in the subsequently discussed simulations were observed with regard to the use of different replacement policies in the cache memories of the nodes of the Peer-to-Peer network.

In the following an evaluation of the above-described caching algorithm is presented. First the simulation setup and then a relevant set of results is described.

### Simulation setup

The method (algorithm) in accordance with embodiments of the invention is applicable to both unstructured P2P networks and DHT. The following results hold for DHTs, as DHT routing was the main focus. All the tests were performed on Chord, as a typical DHT representative. Networks with 500, 1000, 1500, and 2000 nodes were simulated. For some scenarios, results are shown only for a subset of these values.

The main goals of the simulations are:
(1) demonstrate that the inventive algorithm brings important benefits in comparison with the state of the art DHT caching solutions, and
(2) find an optimal algorithm configuration as input parameters change. More specifically, the second goal reads: find the optimal frequency threshold as exogenous parameters such the network size and query distribution change.

To measure the benefits of caching, a metric is used which is derived from the total amount of traffic generated in the system in the following way. Queries are generated at random according to a selected query distribution and all query and caching messages that are generated during the system operation are counted. This is done for a system with the inventive caching algorithm (or a state of the art caching algorithm) deployed and for a system with no caching at all. Then the ratio of the traffic generated with caching and without is calculated. As an illustration, a value 0.6 for a specific caching algorithm means that a 40% traffic reduction was achieved as compared to the case when the same query load is repeated in the system with no caching. The messages counted include normal routing messages, query responses as well as caching messages. It is stressed that the state of the art algorithms do not count caching messages.

### Simulation results

Fig. 4 shows the total traffic reduction as function of the query frequency threshold for different simulation times, i.e., different average number of queries issued per node. The query distribution in all the plots is Zipf with the parameter 0.2. This distribution is to be expected in a typical P2P file sharing network. The topmost curve depicts the total traffic when each node has issued 10 queries on average, i.e., after 100s simulation time, given that the average query rate per node was 0.1 per second. The average number of queries issued per node increases in increments of ten when going downwards in the figure.

There are two important observations to make based on the results from Fig. 4. First, the total traffic is always far below 100%. This means that tracking frequencies of routed queries and replicating data according to the observed query distribution brings benefits in terms of traffic reduction. However, the key observation to make is that there is a region in the middle of the curves, corresponding to the values of the frequency threshold between 0.2 and 0.4, in which the traffic reduction is highest, i.e., total generated traffic lowest possible. More specifically, each curve has a specific optimal value of the frequency threshold p that minimizes the traffic, i.e., maximizes the traffic reduction. As this value always lies between 0.2 and 0.4 and the traffic does not change significantly in this region, the middle value 0.3 may be used as the optimal frequency threshold.

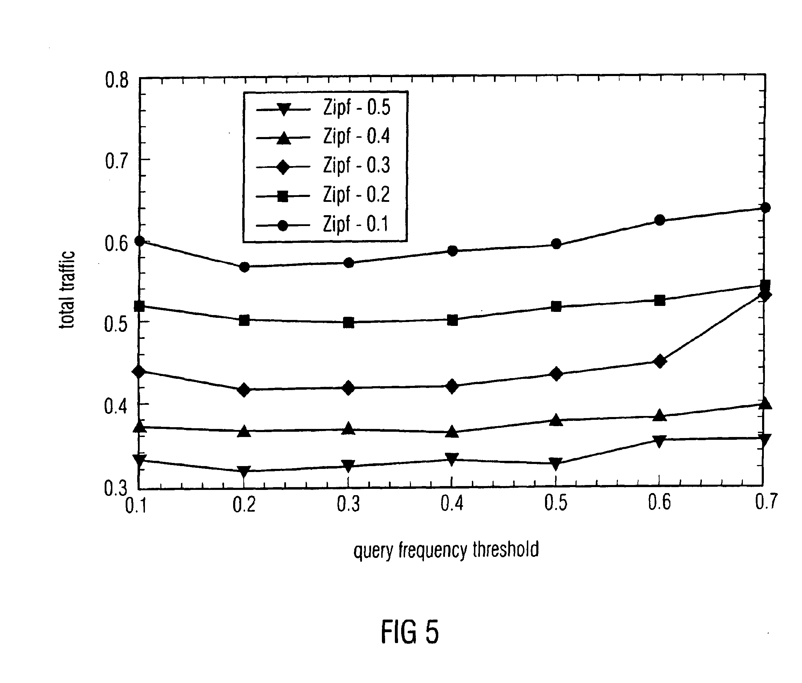

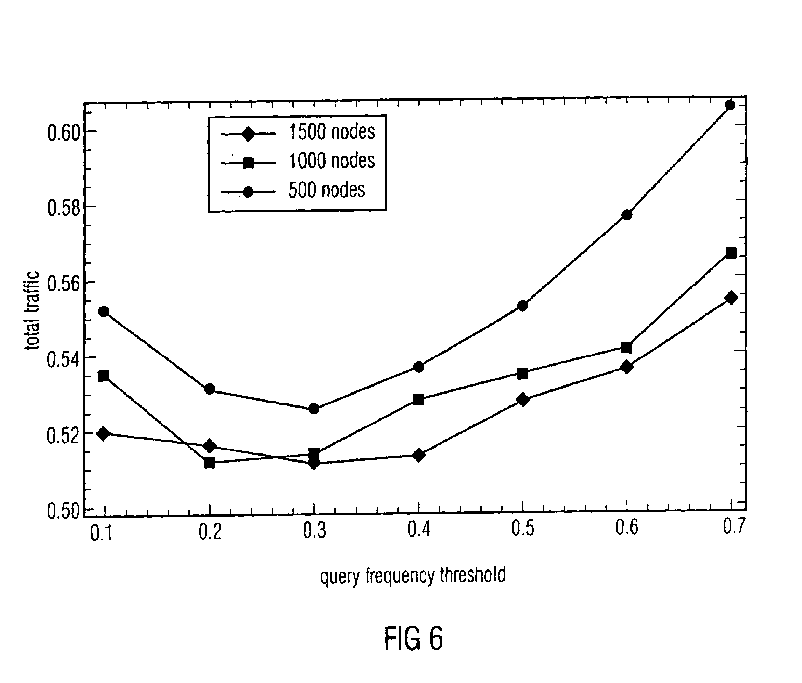

Fig. 5 and Fig. 6 illustrate that this choice remains optimal when other parameters change, in particular the query distribution parameter (see Fig. 5) and the network size (see Fig. 6). A similar behavior, i.e., existence of an optimal frequency threshold, is visible (although less clear) in Fig. 5, which depicts the traffic reduction for different values of the query distribution parameter. The trend is present for each value of the Zipf parameter, particularly for values below 0.3, which are observed in typical P2P deployments. The same holds for each of the curves from Fig. 6, which plots how the traffic changes with the frequency threshold for different network sizes. The simulation time in Figs. 5 and 6 was 600s and 500s, respectively.

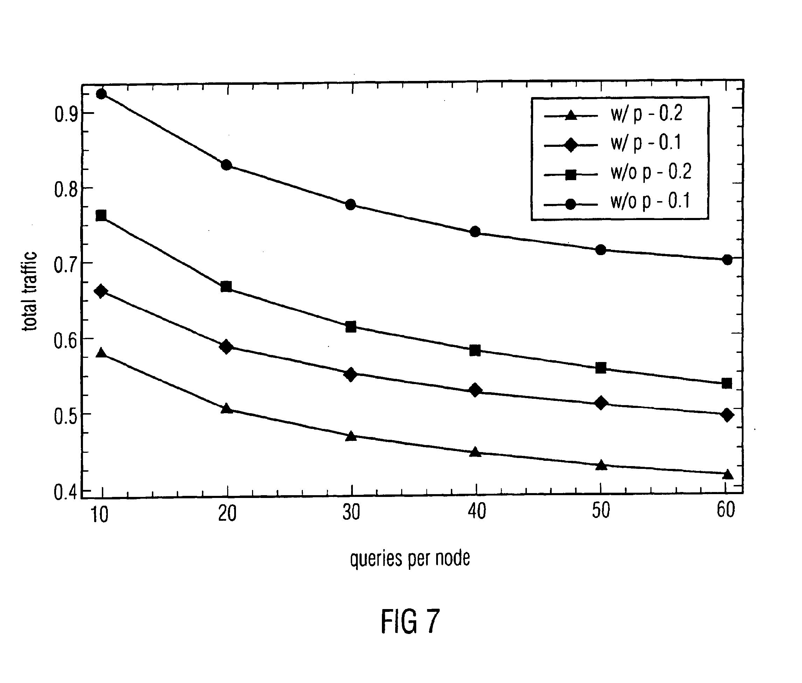

Fig. 7 compares the benefits of the inventive caching algorithm (two lower curves) to the benefits generated by the state of the art caching solutions (e.g. F. Dabek, M. F. Kaashoek, D. Karger, R. Morris, and I. Stoica, "Widearea cooperative storage with CFS," in Proceedings of the 18th ACM Symposium on Operating Systems Principles (SOSP '01), Chateau Lake Louise, Banff, Canada, October 2001 and A. Rowstron and P. Druschel, "Storage management and caching in PAST, a large-scale, persistent peer-to-peer storage utility," in ACM Symposium on Operating Systems Principles (SOSP'01), 2001), in which data is replicated along the full query paths (two upper curves). The inventive algorithm has been tuned to use the optimal value of the query frequency threshold, i.e., p = 0.3. Results for two different Zipf parameters are shown, 0.1 and 0.2. Thus, the first curve should be compared to the third one (as seen from top) and the second one to the forth one. When the query distribution is close to even (Zipf distribution parameter is 0.1 - the first and the third curve), the inventive caching algorithm brings between 25% and 30% further traffic reduction. For the typical query distribution (Zipf parameter 0.2), the benefits are around 20%. Note that the differences between the corresponding curves decrease as the average number of issued queries grows beyond the limits shown in the graphs, but they remain above 10% even when each node in the system issued 3000 queries on average.

This finding means that more dynamic systems, e.g., those with faster changing query distributions, may benefit more from using the inventive caching method. These dynamics are neglected in the prior art publications mentioned above. Thus the inventive solution will benefit even more in real-world deployments.

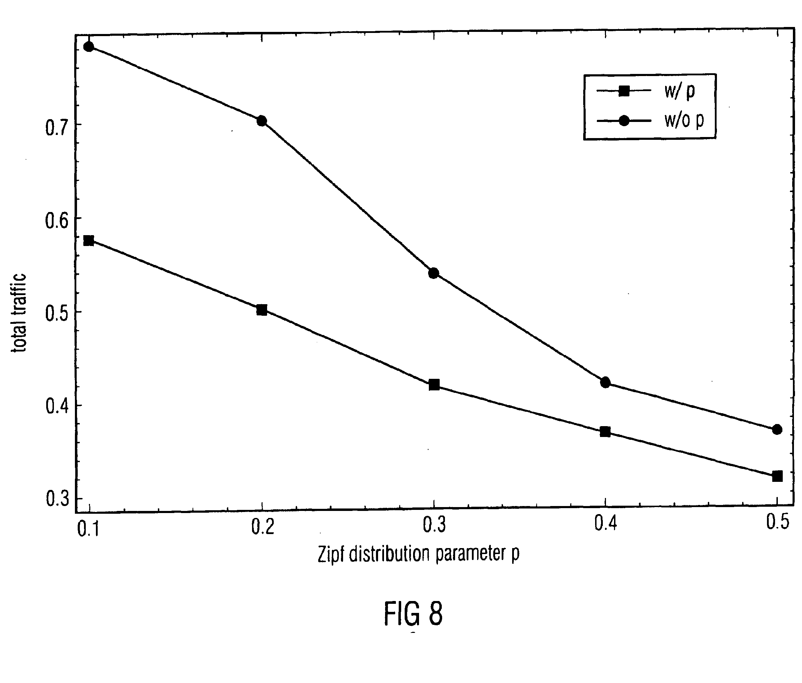

Fig. 8 shows how the traffic depends on the query distribution parameter. The upper curve belongs to the full path replication, the lower one to the inventive caching algorithm. Again, the query frequency threshold was set to 0.3. The traffic reduction is higher for smaller distribution parameters and decreases as the parameter grows. Note that the values higher or equal to 0.4 are pretty improbable in typical P2P deployments, such as file sharing.

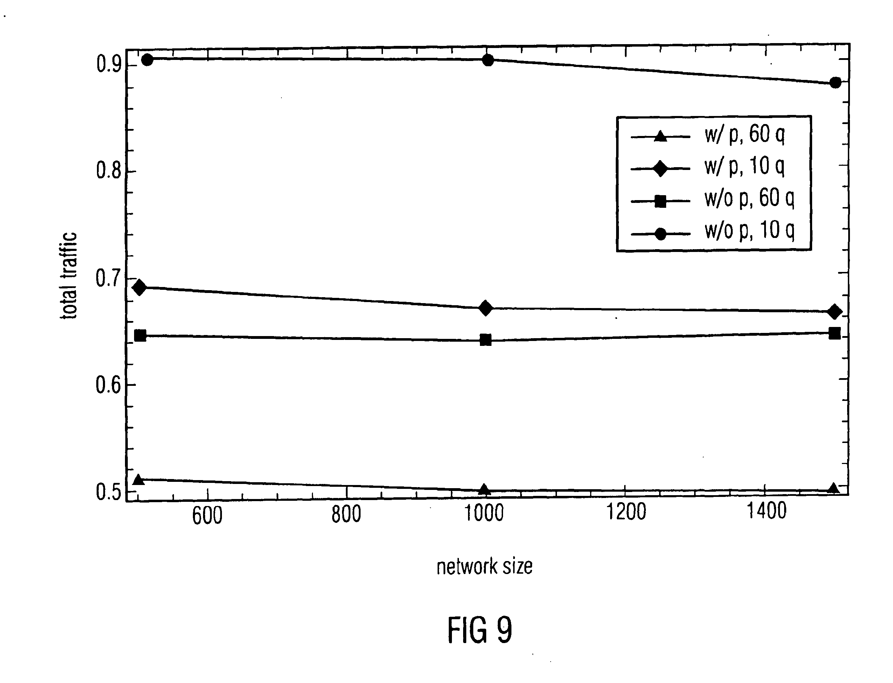

The network size was constant (1500 nodes) in all experiments described. The final experiment evaluates how all these numbers change when the network size changes. Fig. 9 depicts this for two different values of the simulation time, 100s (10 queries per node) and 600s (60 queries per node). The main conclusion to draw from Fig. 9 is that all findings from the previous Figs. remain valid for larger networks as well.

## Claims

1. A method for distributing in a self-organizing, distributed overlay network, a reference to a specific object (A) associated with a node in the network, the reference being stored at a current node (100) of the network, the method comprising:
receiving at the current node (100) from a forwarding node (102, 104) in the network, a query associated with the specific object, the query being generated by a querier node (Q₁, Q₂, Q₃) :
storing a query identification for the query for the specific object and a node identification for the forwarding node as an entry in a table (114b), wherein an entry is generated in the table (114b) for each query received at the current node (100);
**characterised by**
determining a ratio of the number of entries in the table (114b) holding the query identification for a query to the specific object to the overall number of entries in the table, comparing the ratio to a predefined threshold; and
in case the ratio reaches the predefined threshold p, distributing the reference in the network.

2. The method of claim 1, wherein the step of distributing comprises distributing the reference from the current node (100) to one or more nodes (102, 104) that forwarded one or more queries for the object (A) to the current node (100).

3. The method of claim 1 or 2, wherein the step of distributing comprises:
forwarding the reference to the stored forwarding nodes; and
storing the reference at the forwarding nodes.

4. The method of claim 3, further comprising:
determining whether the current node comprises a reference to the specific object; and
in case the current node comprises a reference to the specific object, sending the reference to the querier node (Q₁, Q₂, Q₃),
wherein the step of distributing comprises forwarding the reference in case the current node (100) comprises the reference for the specific object.

5. The method of claim 3 or 4, wherein the querier node is a forwarding node.

6. The method of one of claims 3 to 5, wherein the network comprises a plurality of different objects.

7. The method of one of claims 1 to 6, wherein the current node obtained the reference to the object in response to generating and outputting a query for the object or in response to forwarding the query generated by a querier node.

8. The method of one of claims 1 to 7, wherein the object is selected from the group comprising a predefined content, a file, a document, a service or a provider.

9. The method of one of claims 1 to 8, wherein the self-organizing, distributed overlay network is a Peer-to-Peer network using distributed hash tables.

10. A computer program product comprising instructions configured to carry out the method of one of claims 1 to 9 when the instructions are executed by a processor (112).

11. A node (100) in a self-organizing, distributed overlay network, comprising:
a reference to an object (A) associated with a node in the network; and
a processing unit (112) configured to distribute the reference to the object in the network in accordance with the method of one of claims 1 to 9.

12. A self-organizing, distributed overlay network comprising a plurality of nodes (100 to 108) of claim 11.

## Patentansprüche

1. Ein Verfahren zum Verteilen, in einem selbstorganisierenden, verteilten Überlagerungsnetzwerk, einer Referenz auf ein spezifisches Objekt (A), das einem Knoten in dem Netzwerk zugeordnet ist, wobei die Referenz an einem aktuellen Knoten (100) des Netzwerks gespeichert wird, wobei das Verfahren folgende Schritte aufweist:
Empfangen einer Anfrage, die dem spezifischen Objekt zugeordnet ist, an dem aktuellen Knoten (100) von einem Weiterleitungsknoten (102, 104) in dem Netzwerk, wobei die Anfrage durch einen Anfragerknoten (Q₁, Q₂, Q₃) erzeugt wird;
Speichern einer Anfragekennung für die Anfrage nach dem spezifischen Objekt und einer Knotenkennung für den Weiterleitungsknoten als einen Eintrag in einer Tabelle (114b), wobei für jede Anfrage, die an dem aktuellen Knoten (100) empfangen wird, ein Eintrag in der Tabelle (114b) erzeugt wird;
**gekennzeichnet durch**
Bestimmen eines Verhältnisses der Anzahl von Einträgen in der Tabelle (114b), die die Anfragekennung für eine Anfrage nach dem spezifischen Objekt enthalten, zu der Gesamtzahl von Einträgen in der Tabelle, Vergleichen des Verhältnisses mit einer vordefinierten Schwelle; und
Verteilen der Referenz in dem Netzwerk in dem Fall, dass das Verhältnis die vordefinierte Schwelle p erreicht.

2. Das Verfahren gemäß Anspruch 1, bei dem der Schritt des Verteilens ein Verteilen der Referenz von dem aktuellen Knoten (100) auf einen oder mehrere Knoten (102, 104) aufweist, die eine oder mehrere Anfragen nach dem Objekt (A) an den aktuellen Knoten (100) weitergeleitet haben.

3. Das Verfahren gemäß Anspruch 1 oder 2, bei dem der Schritt des Verteilens folgende Schritte aufweist:
Weiterleiten der Referenz an die gespeicherten Weiterleitungsknoten; und
Speichern der Referenz an den Weiterleitungsknoten.

4. Das Verfahren gemäß Anspruch 3, das ferner folgende Schritte aufweist:
Bestimmen, ob der aktuelle Knoten eine Referenz auf das spezifische Objekt aufweist; und
Senden der Referenz an den Anfragerknoten (Q₁, Q₂, Q₃) in dem Fall, dass der aktuelle Knoten eine Referenz auf das spezifische Objekt aufweist,
wobei der Schritt des Verteilens ein Weiterleiten der Referenz in dem Fall aufweist, dass der aktuelle Knoten (100) die Referenz für das spezifische Objekt aufweist.

5. Das Verfahren gemäß Anspruch 3 oder 4, bei dem der Anfragerknoten ein Weiterleitungsknoten ist.

6. Das Verfahren gemäß einem der Ansprüche 3 bis 5, bei dem das Netzwerk eine Mehrzahl verschiedener Objekte aufweist.

7. Das Verfahren gemäß einem der Ansprüche 1 bis 6, bei dem der aktuelle Knoten die Referenz auf das Objekt ansprechend auf ein Erzeugen und Ausgeben einer Anfrage nach dem Objekt oder ansprechend auf ein Weiterleiten der durch einen Anfragerknoten erzeugten Anfrage erhalten hat.

8. Das Verfahren gemäß einem der Ansprüche 1 bis 7, bei dem das Objekt aus der Gruppe ausgewählt ist, die einen vordefinierten Inhalt, eine Datei, ein Dokument, einen Dienst oder einen Anbieter aufweist.

9. Das Verfahren gemäß einem der Ansprüche 1 bis 8, bei dem das selbstorganisierende, verteilte Überlagerungsnetzwerk ein Partner-zu-Partner-Netzwerk ist, das verteilte Hashtabellen verwendet.

10. Ein Computerprogrammprodukt, das Anweisungen aufweist, die dazu konfiguriert sind, das Verfahren gemäß einem der Ansprüche 1 bis 9 auszuführen, wenn die Anweisungen durch einen Prozessor (112) ausgeführt werden.

11. Ein Knoten (100) in einem selbstorganisierenden, verteilten Überlagerungsnetzwerk, der folgende Merkmale aufweist:
eine Referenz auf ein Objekt (A), das einem Knoten in dem Netzwerk zugeordnet ist; und
eine Verarbeitungseinheit (112), die dazu konfiguriert ist, die Referenz auf das Objekt in dem Netzwerk entsprechend dem Verfahren gemäß einem der Ansprüche 1 bis 9 zu verteilen.

12. Ein selbstorganisierendes, verteiltes Überlagerungsnetzwerk, das eine Mehrzahl von Knoten (100 bis 108) gemäß Anspruch 11 aufweist.

## Revendications

1. Procédé de distribution dans un réseau superposé distribué auto-organisateur, d'une référence à un objet spécifique (A) associé à un noeud dans le réseau, ladite référence étant stockée dans un noeud actuel (100) du réseau, ledit procédé comprenant le fait de:
recevoir dans le noeud actuel (100), d'un noeud d'envoi (102, 104) dans le réseau, une requête associé à l'objet spécifique, ladite requête étant générée par un noeud de requête (Q₁, Q₂, Q₃);
stocker une identification de requête pour la requête pour l'objet spécifique et une identification de noeud pour le noeud d'envoi comme une entrée dans un tableau (114b), dans lequel une entrée est générée dans le tableau (114b) pour chaque requête reçue au noeud actuel (100);
**caractérisé par** le fait de
déterminer un rapport entre le nombre d'entrées dans le tableau (114b) contenant l'identification de requête pour une requête à l'objet spécifique et le nombre total d'entrées dans le tableau, comparer le rapport avec un seuil prédéterminé; et
au cas où le rapport atteint le seuil prédéterminé p, distribuer la référence dans le réseau.

2. Procédé selon la revendication 1, dans lequel l'étape de distribution comprend le fait de distribuer la référence du noeud actuel (100) à un ou plusieurs noeuds (102, 104) qui ont envoyé une ou plusieurs requêtes pour l'objet (A) au noeud actuel (100).

3. Procédé selon la revendication 1 ou 2, dans lequel l'étape de distribution comprend le fait de:
envoyer la référence aux noeuds d'envoi stockés; et
stocker la référence aux noeuds d'envoi.

4. Procédé selon la revendication 3, comprenant par ailleurs le fait de;
déterminer si le noeud actuel comprend une référence à l'objet spécifique; et
au cas où le noeud actuel comprend une référence à l'objet spécifique, envoyer la référence au noeud de requête (Q₁, Q₂, Q₃),
dans lequel l'étape de distribution comprend le fait d'envoyer la référence au cas où le noeud actuel (100) comprend la référence pour l'objet spécifique.

5. Procédé selon la revendication 3 ou 4, dans lequel le noeud de requête est un noeud d'envoi.

6. Procédé selon l'une des revendications 3 à 5, dans lequel le réseau comprend une pluralité d'objets différents.

7. Procédé selon l'une des revendications 1 à 6, dans lequel le noeud actuel a obtenu la référence à l'objet en réponse à la génération et à la sortie d'une requête pour l'objet ou en réponse à l'envoi de la requête générée par un noeud de requête.

8. Procédé selon l'une des revendications 1 à 7, dans lequel l'objet est sélectionné parmi le groupe comprenant un contenu prédéterminé, un fichier, un document, un service ou un fournisseur.

9. Procédé selon l'une des revendications 1 à 8, dans lequel le réseau superposé distribué auto-organisateur est un réseau pair à pair utilisant des tableaux de compression distribués.

10. Programme d'ordinateur comprenant des instructions configurées pour réaliser le procédé selon l'une des revendications 1 à 9 lorsque les instructions sont exécutées par un processeur (112).

11. Noeud (100) dans un réseau superposé distribué auto-organisateur, comprenant:
une référence à un objet (A) associé au noeud dans le réseau; et
une unité de traitement (112) configurée pour distribuer la référence à l'objet dans le réseau selon le procédé selon l'une des revendications 1 à 9.

12. Réseau superposé distribué auto-organisateur comprenant une pluralité de noeuds (100 à 108) selon la revendication 11.
